# EUROPÄISCHE PATENTSCHRIFT

(11) **EP 1 320 974 B1**
(45) Veröffentlichungstag und Bekanntmachung des Hinweises auf die Patenterteilung: **01.10.2014**
(21) Anmeldenummer: 01971664.6
(22) Anmeldetag: 29.08.2001
(51) Int. Cl.: H04L 29/06, H04W 80/00, H04L 12/58

(54) **DIGITALES VERZEICHNIS FÜR SOFORTIGEN BERICHTENDIENST**
DIGITAL DIRECTORY FOR USE IN A COMMUNICATIONS SYSTEM
REPERTOIRE ELECTRONIQUE A UTILISER DANS UN SYSTEME DE COMMUNICATION

(30) Priorität: 26.09.2000 DE 10048653
(43) Veröffentlichungstag der Anmeldung: 25.06.2003
(73) Patentinhaber: Vodafone Holding GmbH, 40213 Düsseldorf (DE)
(72) Erfinder: HERTLE, Jochen, 85521 Ottobrunn (DE); LANG, Thomas, 81543 München (DE)
(74) Vertreter: Meissner, Peter E.
(86) Internationale Anmeldenummer: PCT/DE2001/003297
(87) Internationale Veröffentlichungsnummer: WO 2002/028049

(56) Entgegenhaltungen:
- ANONYMOUS: "Tegic Communications Extends Instant Messaging to Wireless Phones with Next Generation of T9® Text Input Software" INTERNET ARTICLE, [Online] 27. Juli 1999 (1999-07-27), XP002199725 Gefunden im Internet: <URL:http://www.tegic.com/pressreleases/pr _instantmessaging.html> [gefunden am 2002-05-22]
- MOHR G ET AL: ", PIP-DEMO: An Interoperable Presence Information Protocol" IETF INTERNET-DRAFT, August 1998 (1998-08), XP002173457
- DAY M ET AL: "A Model for Presence and Instant Messaging" IETF RFC 2778, Februar 2000 (2000-02), XP002199726

## Beschreibung

Die vorliegende Erfindung betrifft ein digitales Verzeichnis zur Verwendung in einem Kommunikationssystem gemäß dem Oberbegriff von Patentanspruch 1, ein Verfahren zum Betreiben eines Kommunikationssystems gemäß den Oberbegriff von Patentanspruch 7 sowie ein Kommunikationsnetz gemäß dem Oberbegriff von Patentanspruch 13.

Mit dem Aufkommen und der raschen Verbreitung des Internets haben sich in letzter Zeit eine Reihe neuer Kommunikationsformen entwickelt. Eine dieser neuartigen Kommunikationsformen stellen die sogenannten Messenger-Systeme dar.

Hierbei handelt es sich um eine spezielle Art von Kommunikationssystemen, bei denen Nutzer direkt miteinander kommunizieren können, wenn sie sich beispielsweise online im Internet befinden.

Um sich einem derartigen Messenger-System anschließen zu können, muß man sich zunächst beim Betreiber des Messenger-Systems anmelden und registrieren lassen. Dabei wird dem Nutzer unter anderem auch ein Benutzername zugeordnet, den sich der Nutzer in der Regel selbst auswählen kann. Nach der erfolgreichen Anmeldung wird der Nutzer Mitglied des Messenger-Systems.

Um mit anderen Mitgliedern des Messenger-Systems kommunizieren zu können, muß sich der Nutzer weiterhin eine Adreßliste zusammenstellen, in der er solche Nutzer zusammenfaßt, mit denen er gerne kommunizieren möchte. Eine derartige Adreßliste wird beispielsweise als "Buddy-Liste" bezeichnet. Bei den aus der Nutzergesamtheit des Messenger-Systems vom Nutzer ausgewählten und in der Adreßliste abgelegten Nutzern handelt es sich also um auf den jeweiligen Nutzer bezogene Adressat-Nutzer. Jeder Nutzer kann seine Adreßliste jederzeit verändern, beispielsweise indem er weitere Adressat-Nutzer aufnimmt oder aber Adressat-Nutzer aus der Adreßliste löscht.

Die Kommunikation in einem Messenger-System funktioniert in der Regel wie folgt. Zunächst muß sich das Mitglied eines Messenger-Systems online in einem Kommunikationsnetz befinden. Beispielsweise kann ein solches Kommunikationsnetz ein Datennetz wie das Internet, ein Mobilfunknetz oder dergleichen sein. Während sich also das Mitglied des Messenger-Systems online im Kommunikationsnetz bewegt, kann es zusätzlich das weitere Kommunikationssystem starten, bei dem es sich beispielsweise um ein Messenger-System handelt. Nachdem das entsprechende Programm des Messenger-Systems gestartet wurde, wird dem Nutzer in einem digitalen Verzeichnis angezeigt, wer von seinen zusammengestellten Adressat-Nutzern sich ebenfalls gerade online im Kommunikationsnetz befindet. Umgekehrt wird allen vom Nutzer benannten und sich online befindenden Adressat-Nutzern angezeigt, dass sich nunmehr auch der Nutzer online im Kommunikationsnetz befindet.

Der Nutzer kann nun eine Nachricht verfassen und diese an einen oder mehrere der Adressat-Nutzer versenden. Diese können auf die vom Nutzer abgeschickte Nachricht gleich antworten, so dass neben der eigentlichen Online-Tätigkeit eines jeden Nutzers ein Kommunikationsaustausch stattfinden kann. Dieser-Kommunikationsaustausch funktioniert in etwa wie bei den bekannten "Chat-Systemen".

Ein zentraler Bestandteil bei den bekannten Messenger-Systemen ist die Adreßliste (Buddy-Liste). Hierbei handelt es sich in der Regel um ein digitales Verzeichnis, das auf einer Anzeigeeinrichtung eines insbesondere dem Nutzer zugeordneten Endgeräts dargestellt wird, wobei das digitale Verzeichnis in einer elektronischen Speichereinheit abgespeichert ist. Wenn der Nutzer des Messenger-Systems beispielsweise an einem Personal Computer arbeitet, wird das digitale Verzeichnis in der Regel auf dem Computerbildschirm dargestellt.

Das digitale Verzeichnis verfügt über eine Reihe von Informationen, die dem jeweiligen Adressat-Nutzer zugeordnet sind. Zunächst weist das Verzeichnis einen ersten Datensatz auf, der in der Speichereinheit abgespeichert ist, und der erste Informationen zur Identifizierung des Adressat-Nutzers umfaßt. Hierbei handelt es sich beispielsweise um den Benutzernamen des jeweiligen Adressat-Nutzers und/oder um andere Informationen bezüglich dessen Identität. Weiterhin umfaßt das digitale Verzeichnis üblicherweise wenigstens einen Satz weiterer, zweiter Informationen, die jeweils den entsprechenden ersten Informationen elektronisch zugeordnet sind, und die dem jeweiligen Adressat-Nutzer zugeordnete zusätzliche Informationen umfassen. Derartige zweite Informationen sind beispielsweise Hinweise dazu, ob sich der im digitalen Verzeichnis abgespeicherte Adressat-Nutzer zur Zeit online oder offline befindet. Weiterhin können die zweiten Informationen Hinweise darüber enthalten, ob ein sich gerade online befindlicher Adressat-Nutzer beschäftigt und damit nicht ansprechbar ist, oder aber ob der Adressat-Nutzer grundsätzlich zur Kommunikationsaufnahme bereit ist. Schließlich ist es auch bekannt, im digitalen Verzeichnis sogenannte "Emoticons" zu plazieren. Hierbei handelt es sich um Symbole, die den jeweiligen aktuellen Gemütszustand des Adressat-Nutzers wiedergeben.

Das auf diese Weise erzeugte digitale Verzeichnis wird somit von unterschiedlichen Nutzern, das heißt Mitgliedern des Messenger-Systems, erstellt und/oder bearbeitet. Derjenige Nutzer des Messenger-Systems, der sich eine in Form des digitalen Verzeichnisses ausgebildete Adreßliste erstellt, hat die Möglichkeit, aus der Gesamtheit der Nutzer des Messenger-Systems solche Adressat-Nutzer auszuwählen, mit denen er gerne kommunizieren: möchte. Diese Adressat-Nutzer kann er sich elektronisch in seinem digitalen Verzeichnis abspeichern. Allerdings kann er die den jeweiligen Adressat-Nutzern zugeordneten Informationen nicht beeinflussen. Die Erstellung und/oder Bearbeitung dieser einem jedem Adressat-Nutzer zugeordneten Informationen obliegt diesem zumindest teilweise selbst. So ist jeder Adressat-Nutzer zunächst für die Auswahl der ihn identifizierenden Informationen, beispielsweise des Benutzernamens verantwortlich. Dies erfolgt in der Regel bereits bei der Anmeldung zum Messenger-System.

Weiterhin kann jeder Adressat-Nutzer beziehungsweise Nutzer, der ja immer auch Adressat-Nutzer für andere Nutzer ist, dem Kommunikationssystem angeben, ob er kommunikationsbereit ist oder nicht. Auch kann er unterschiedliche Emoticons, beispielsweise für seine aktuelle Gemütsverfassung, auswählen. Die Überprüfung darauf, ob ein Benutzer online oder offline ist, wird in der Regel vom Kommunikationssystem selbst durchgeführt und unabhängig von Aktivitäten des Nutzers beziehungsweise Adressat-Nutzers im digitalen Verzeichnis angezeigt.

Bei den bisher bekannten Messenger-Systemen werden bis auf den individuellen Benutzernamen des Nutzers alle im digitalen Verzeichnis angezeigten Informationen die dem Adressat-Nutzer zugeordnet sind, vom System mehr oder weniger vorgegeben. So hat der Nutzer beziehungsweise Adressat-Nutzer keinen Einfluß darauf, in welcher Form ein Hinweis darauf erfolgt, ob er zur Kommunikationsaufnahme bereit ist in manchen bekannten Messenger-Systemen wird dies beispielsweise dadurch angezeigt, dass der Benutzername je nach Zustand in Fettschrift, in Kursivschrift, unterstrichen oder dergleichen dargestellt wird. Auch sind Lösungen bekannt, bei denen die vorhandene oder fehlende Kommunikationsbereitschaft über unterschiedliche farbliche Markierungen dargestellt wird.

Wenn das Messenger-System sogenannte Emoticons anbietet, hat der Nutzer beziehungsweise Adressat-Nutzer bisher nur die Möglichkeit, aus einer fest vorgegebenen Auswahl solche Emoticons auszuwählen.

Die Druckschrift ANONYMOUS: "Tegic Communications Extends Instant Messaging to Wireless Phones with Next Generation of T9 Text Input Software" Internet Article, July 27, 1999, offenbart ein digitales Verzeichnis zur Verwendung in einem Kommunikations-system, bei dem eine Anzahl von Nutzern mittels entsprechender Endgeräte miteinander kommunizieren oder kommunizieren können, und zur Darstellung in einer Anzeigeeinrichtung eines insbesondere dem Nutzer zugeordneten Endgeräts, wobei das digitale Verzeichnis in einer elektronischen Speichereinheit abgespeichert ist (implizit) und wobei das Verzeichnis eine von einem Nutzer des Kommunikationssystems aus der Nutzergesamtheit des Kommunikationssystems ausgewählte Anzahl von Adressat-Nutzern, mit denen der Nutzer kommunizieren möchte, sowie diesen Adressat-Nutzern zugeordnete Informationen umfasst (Absatz 1 und 2), mit einem ersten, in der Speichereinheit abgespeicherten Datensatz, der erste Informationen zur Identifizierung der Adressat-Nutzer umfasst und mit wenigstens einem Satz (implizit) weiterer, zweiter Informationen, die jeweils den entsprechenden ersten Informationen elektronisch zugeordnet sind und die dem jeweiligen Adressat-Nutzer zugeordnete zusätzliche Informationen umfassen (Absatz 2).

Die Schrift MOHR, G. et al: "PIP-DEMO: An Interoperable Presence Information Protocol draftmohr-pip-pipdemo-00.txt zeigt auf, wie es bei einem Verzeichnis gemäß dem vorstehend beschriebenen Stand der Technik einem Nutzer ermöglicht ist, den anderen Nutzem weitere Informationen über seinen Status zu geben.

Der vorliegenden Erfindung liegt die Aufgabe zu Grunde, die Benutzerfreundlichkeit im Zusammenhang mit solchen digitalen Verzeichnissen zu erhöhen. Weiterhin sollen die digitalen Verzeichnisse um zusätzliche Informationen ergänzt werden.

Diese Aufgabe wird gelöst durch das digitale Verzeichnis gemäß Patentanspruch 1, das Verfahren zum Betreiben eines Kommunikationssystems gemäß Patentanspruch 7 sowie das Kommunikationsnetz gemäß Patentanspruch 13. Weitere Vorteile, Merkmale, Details und Effekte der Erfindung ergeben sich aus den Unteransprüchen, der Beschreibung sowie der Zeichnung.

Merkmale und Details, die im Hinblick auf die verschiedenen Aspekte der Erfindung, nämlich für das erfindungsgemäße digitale Verzeichnis, das Verfahren zum Betreiben eines Kommunikationssystems sowie das Kommunikationsnetz beschrieben sind, gelten wechselweise untereinander.

Gründlage der Erfindung ist ein digitales Verzeichnis zur Verwendung in einem Kommunikationssystem, bei dem eine Anzahl von Nutzern mittels entsprechender Endgeräte miteinander kommunizieren oder kommunizieren können, und zur Darstellung auf einer Anzeigeeinrichtung eines insbesondere dem Nutzer zugeordneten Endgeräts, wobei das digitale Verzeichnis, in einer elektronischen Speichereinheit abgespeichert ist und wobei das Verzeichnis eine von einem Nutzer des Kommunikationssystems aus der Nutzergesamtheit des Kommunikationssystems ausgewählte Anzahl von Adressat-Nutzem, mit denen der Nutzer kommunizieren möchte, sowie diesen Adressat-Nutzern zugeordnete Informationen umfaßt. Das digitale Verzeichnis weist zunächst einen ersten, in der Speichereinheit abgespeicherten Datensatz auf, der erste Informationen zur Identifizierung der Adressat-Nutzer umfaßt. Weiterhin ist wenigstens ein Satz weiterer zweiter Informationen vorgesehen, die jeweils den entsprechenden ersten Informationen elektronisch zugeordnet sind und die dem jeweiligen Adressat-Nutzer zugeordnete zusätzliche Informationen umfassen. Dieses digitale Verzeichnis ist derart gestaltet, dass es wenigstens einen Kennungs-Datensatz aufweist, der in der Speichereinheit abgespeichert ist, dass der Kennungs-Datensatz Kennungen aufweist, die jeweils entsprechenden zweiten Informationen elektronisch zugeordnet sind, dass die Kennungen von einem jeweiligen Nutzer und/oder Adressat-Nutzer frei definiert oder definierbar sind und dass die Kennungen elektronisch derart mit den zweiten Informationen verknüpft sind, dass in der Anzeigeeinrichtung des Endgeräts der erste Datensatz und an Stelle der zweiten Informationen der diese repräsentierende Kennungs-Datensatz angezeigt wird oder anzeigbar ist.

Erfindungsgemäß umfassen die zweiten Informationen spezifische Informationen über den Standort des Endgeräts des Adressat-Nutzers. Dadurch wird die in einem digitalen Verzeichnis dem jeweiligen Adressat-Nutzer zugeordnete Gesamtinformation um einen weiteren, vorteilhaften Bestandteil erweitert. Nunmehr ist es möglich, dass ein Nutzer des Kommunikationssystems, der das.von ihm erstellte digitale Verzeichnis aufruft, aus diesem erkennen kann, wo sich die einzelnen Adressat-Nutzer befinden. Dies kann insbesondere in solchen Fällen von Vorteil sein. in denen die einzelnen Nutzer mobil sind. Ein Beispiel hierfür wird im weiteren Verlauf der Beschreibung näher erläutert.

Wenn die zweiten Informationen spezifische Informationen über den Standort des Endgeräts des Adressat-Nutzers umfassen, kann der Adressat-Nutzer diese nunmehr mit einer Kennung belegen, die er frei definieren kann. Dadurch ist es dem Adressat-Nutzer möglich, seine Aufenthaltsorte selbst zu kodieren.

Wenn das Endgerät beispielsweise ein Mobiltelefon ist, welches in einem Mobilfunknetz eingesetzt wird, könnte es sich bei der Ortsangabe auch um eine bestimmte Zelle handeln, die vom Mobilfunknetz identifiziert werden kann (Cell-ID).

Durch das erfindungsgemäße digitale Verzeichnis ist der Nutzer beziehungsweise Adressat-Nutzer nunmehr in der Lage, diesen ermittelten Ort mit einer eigenen Kennung zu versehen. An Stelle von Georeferenzwerten werden nunmehr die vom Nutzer beziehungsweise Adressat-Nutzer gewählten Kennungen im digitalen Verzeichnis angezeigt. So ist es für den Nutzer beziehungsweise Adressat-Nutzer beispielsweise möglich, seine Aufenthaltsorte mit den Namen von Phantasieplätzen oder ähnlichem zu verknüpfen. Dies ist beispielsweise dann von Vorteil, wenn sich der Nutzer beziehungsweise Adressat-Nutzer mit anderen Nutzern in einem über ein Kommunikationssystem abgewickelten Spiel befindet.

Sei der vorstehend beschriebenen Ausgestaltungsform ist es weiterhin möglich, verschiedenste Aufenthaltsorte des Nutzers beziehungsweise Adressat-Nutzers, mit unterschiedlichen Kennungen zu verknüpfen. Wenn dann der Nutzer mit seinem Endgerät einen dieser Aufenthaltsorte erreicht, wird die entsprechende Kennung im digitalen Verzeichnis angezeigt.

Grundsätzlich ist die Erfindung nicht auf bestimmte Formen von Kennungen beschränkt. So ist es beispielsweise denkbar, dass die Kennungen in Form von Text und/oder Symbolen und/oder Geräuschen und/oder Melodien und/oder Videosequenzen ausgebildet sind. Natürlich sind auch andere Ausgestaltungsformen für die Kennungen denkbar.

In weiterer Ausgestaltung können Kennungen in bezug auf das Endgerät standortabhängig definiert und elektronisch zugeordnet sein oder werden. In diesem Fall können die Kennungen direkt über das Endgerät definiert werden. Dies soll in Form eines nicht ausschließlichen Beispiels an Hand der Zuordnung eines aktuellen Aufenthaltsorts zu einer frei definierbaren Kennung erläutert werden. Bei der standortabhängigen Erzeugung der Kennung wird über das Endgerät und das Kommunikationssystem zunächst unabhängig vom Nutzer beziehungsweise Adressat-Nutzer der Standort beziehungsweise aktuelle Aufenthaltsort des Endgeräts bestimmt. Diese Ortsangabe, die in Form von Zellidentitäten vorliegt, stellt eine im Hinblick auf die Erfindung zweite Information dar, die einer ersten Information zur Identifizierung des Adressat-Nutzers, etwa dessen Benutzernamen, zugeordnet ist.

Je nach Bedarf und Anwendungsfall kann diese Standortbestimmung mehr oder weniger grob ausfallen.

Der Adressat-Nutzer gibt nun über sein Endgerät eine gewünschte Kennung ein, die anschließend mit der zweiten Information, das heißt den in Form von Zellidentitäten vorliegenden Ortsangaben, derart verknüpft wird, dass im digitalen Verzeichnis nur die vom Adressat-Nutzer frei definierte Kennung angezeigt wird. Die entsprechenden Informationen können in Form von Datensätzen in der Speichereinheit gespeichert werden oder sein. Immer wenn nun der Nutzer beziehungsweise Adressat-Nutzer den auf diese Weise definierten Ort aufsucht, wird dies über die entsprechende Kennung im digitalen Verzeichnis angezeigt.

Besonders vorteilhaft kann ein wie vorstehend beschriebenes erfindungsgemäßes digitales Verzeichnis in einem Messenger-System verwendet werden. In diesem Fall handelt es sich beim digitalen Verzeichnis vorzugsweise um die Darstellung einer Liste (Buddy-Liste) auf einem Endgerät, welche Namen von Freunden, Bekannten, Kollegen und dergleichen, sowie beispielsweise zusätzliche und aktuelle Informationen wie etwa über den Status (online/offline), den Gemütszustand (Emoticons), den Aufenthaltsort und dergleichen dieser Adressat-Nutzer enthält.

Gemäß einem weiteren Aspekt der Erfindung wird ein Verfahren zum Betreiben eines Kommunikationssystems in einem Kommunikationsnetz bereitgestellt, bei dem eine Anzahl von Nutzern mittels entsprechender Endgeräte miteinander, kommunizieren oder kommunizieren können, wobei jedem Nutzer ein digitales Verzeichnis, insbesondere ein wie vorstehend beschriebenes erfindungsgemäßes digitales Verzeichnis zugeordnet wird, das elektronisch in der Speichereinheit abgespeichert wird und das eine vom jeweiligen Nutzer aus der Nutzergesamtheit des Kommunikationssystems ausgewählte Anzahl von Adressat-Nutzern, mit denen der Nutzer kommunizieren möchte, sowie diesen Adressat-Nutzern zugeordnete Informationen umfaßt. Bei dem Verfahren weist das digitale Verzeichnis einen ersten in der Speichereinheit elektronisch abgespeicherten Datensatz auf, der erste Informationen zur Identifizierung der im digitalen Verzeichnis befindlichen Adressat-Nutzer umfaßt. Weiterhin wird jeder ersten Information aus dem ersten Datensatz wenigstens eine weitere, zweite Information elektronisch zugeordnet, in der zusätzliche, dem jeweiligen Adressat-Nutzer zugeordnete Informationen enthalten sind. Das Verfahren ist erfindungsgemäß dadurch gekennzeichnet, dass der wenigstens einen weiteren, zweiten Information eine Kennung zugeordnet wird, die vom entsprechenden Adressat-Nutzer frei definiert wird , dass die Kennungen in Form eines Kennungs-Datensatzes elektronisch in der Speichereinheit abgespeichert werden und dass in einer Anzeigeeinrichtung eines jeden Endgeräts der erste Datensatz und an Stelle der weiteren, zweiten Information der diese repräsentierende Kennungs-Datensatz angezeigt wird.

Durch das erfindungsgemäße Verfahren kann auf besonders einfache und benutzerfreundliche Weise ein Kommunikationssystem in einem Kommunikationsnetzwerk betrieben werden. Zu den Vorteilen und der Funktionsweise des erfindungsgemäßen Verfahrens wird auf die vorstehenden Ausführungen zum erfindungsgemäßen digitalen Verzeichnis Bezug genommen und hiermit verwiesen.

Vorteilhaft können neben dem ersten Datensatz und dem Kennungs-Datensatz weitere Informationen in Form wenigstens eines dritten Datensatzes in der Anzeigeeinrichtung des Endgeräts angezeigt werden, wobei die Informationen des dritten Datensatzes, die zusätzliche, dem jeweiligen Adressat-Nutzer zugeordnete Informationen enthalten, entsprechenden ersten Informationen aus dem ersten Datensatz zugeordnet und elektronisch in der Speichereinheit abgespeichert werden.

Vorteilhaft kann das Kommunikationsnetz wenigstens eine zentrale Rechnereinheit aufweisen, wobei die Speichereinheit der Rechnereinheit zugeordnet ist und wobei die von jedem Nutzer beziehungsweise Adressat-Nutzer des Kommunikationssystems erstellten, ihm zugeordneten Informationen und/oder Kennungen und/oder das digitale Verzeichnis eines jeden Nutzers in der Speichereinheit abgespeichert werden.

In einem solchen Fall sind alle relevanten Informationen bezüglich der Nutzer beziehungsweise der Adressat-Nutzer in der zentralen Rechnereinheit des Kommunikationsnetzes abgespeichert. Die einzelnen Endgeräte der Nutzer können in einem solchen Fall entsprechend einfach ausgestaltet sein. Beispielsweise kann dann das digitale Verzeichnis in der zentralen Rechnereinheit, bei der es sich beispielsweise um einen Server handelt, aufgebaut, und anschließend im Endgerät dargestellt werden, etwa mittels eines Browsers. Dabei können die Inhalte des digitalen Verzeichnisses von der Rechnereinheit in kodierter Form, zum Beispiel mittels HTML, WML, XML oder dergleichen, an den Browser im Endgerät übertragen werden.

In anderer Ausgestaltung kann jedes Endgerät eine Speichereinheit aufweisen, wobei die von jedem Nutzer beziehungsweise Adressat-Nutzer des Kommunikationssystems erstellten, ihm zugeordneten Informationen und/oder Kennungen und/oder das digitale Verzeichnis eines jeden Nutzers in der Speichereinheit abgespeichert werden. In diesem Fall handelt es sich bei dem digitalen Verzeichnis um eine Applikation im Endgerät.

Es ist auch möglich, dass ein wie vorstehend beschriebenes, als Applikation im Endgerät ausgebildetes digitales Verzeichnis die dynamischen Informationen über eine zentrale Rechnereinheit bezieht.

Vorteilhaft werden die im digitalen Verzeichnis zusammengefaßten spezifischen Informationen eines bestimmten Nutzers von diesem selbst erzeugt und/oder bearbeitet.

Vorteilhaft kann als Kommunikationssystem ein Messenger-System verwendet werden.

Als Kommunikationsnetz kann beispielsweise, jedoch nicht ausschließlich, ein Datennetz und/oder ein Mobilfunknetz verwendet werden. Bei dem Datennetz kann es sich beispielsweise um das Internet handeln.

Es ist jedoch auch denkbar, dass das Kommunikationsnetz aus zwei miteinander verknüpften Teilnetzen besteht. Dabei kann ein Teilnetz als Datennetz und ein Teilnetz als Mobilfunknetz ausgebildet sein. Bei den Endgeräten des als Datennetz ausgebildeten Teilnetzes kann, es sich dann um Personal Computer und dergleichen handeln, während die Endgeräte des als Mobilfunknetz ausgebildeten Teilnetzes Mobiltelefone mit entsprechender Datenkommunikationsschnittstelle sind.

Vorteilhaft kann als Mobilfunknetz ein zellulares Mobilfunknetz verwendet werden, wobei der ersten Information aus dem ersten Datensatz als zweite Information erfindungsgemäß eine Zellenidentifikation (Cell-ID) zugeordnet wird und wobei der Zellenidentifikation eine vom entsprechenden Adressat-Nutzer frei definierbare Kennung zugeordnet wird.

Gemäß einem weiteren Aspekt der Erfindung wird ein Kommunikationsnetz bereitgestellt, mit wenigstens einer elektronischen Speichereinheit und einer Anzahl von Endgeräten, über die Nutzer im Kommunikationsnetz kommunizieren oder kommunizieren können. Das Kommunikationsnetz ist erfindungsgemäß dadurch gekennzeichnet, dass für jeden Nutzer ein wie vorstehend beschriebenes erfindungsgemäßes digitales Verzeichnis vorgesehen ist.

Das Kommunikationsnetz kann vorteilhaft zur Durchführung eines wie vorstehend beschriebenen erfindungsgemäßen Verfahrens zum Erstellen und/oder Bearbeiten des digitalen Verzeichnisses und/oder zur Durchführung eines wie vorstehend beschriebenen erfindungsgemäßen Verfahrens zum Betreiben eines Kommunikationssystems in einem Kommunikationsnetz ausgebildet sein.

Vorteilhaft kann das Kommunikationsnetz eine zentrale Rechnereinheit aufweisen, wobei die Speichereinheit der Rechnereinheit zugeordnet ist. Es ist jedoch auch denkbar, dass jedem Endgerät eine Speichereinheit zugeordnet ist.

Vorteilhaft ist wenigstens ein Endgerät als mobiles Endgerät ausgebildet. Bei solchen mobilen Endgeräten handelt es sich beispielsweise jedoch nicht ausschließlich, um Mobiltelefone (Handys), Palmtops. Laptops. Autocomputer oder dergleichen.

Vorteilhaft kann das Kommunikationssystem als Messenger-System ausgebildet sein.

Das Kommunikationsnetz kann als Datennetz und Mobilfunknetz oder mit Mobilfunknetz ausgebildet sein. Besonders vorteilhaft ist das Kommunikationsnetz aus zwei miteinander verknüpften Teilnetzen gebildet, wobei ein Teilnetz als Datennetz und ein Teilnetz als Mobilfunknetz ausgebildet ist.

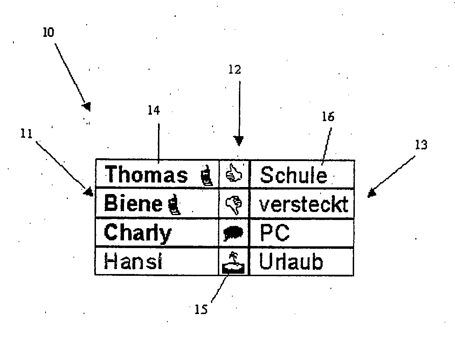

Die Erfindung wird nun an Hand eines Ausführungsbeispiels unter Bezugnahme auf die beiliegende Zeichnung näher erläutert. Dabei zeigt die einzige Figur 1 in schematischer Weise ein erfindungsgemäßes digitales Verzeichnis.

Bei dem in Figur 1 dargestellten digitalen Verzeichnis 10 handelt es sich um ein Verzeichnis; das in einem als Messenger-System ausgebildeten Kommunikationssystem vorgesehen ist. Das Messenger-System ist über einem Kommunikationsnetz aufgebaut, das wiederum aus zwei Teilnetzen besteht. Bei einem Teilnetz handelt es sich um ein Datennetz, im vorliegenden Fall das Internet, während es sich beim zweiten Teilnetz um ein zellulares Mobilfunknetz handelt. Beide Netze sind Teile derart miteinander gekoppelt, dass die Nutzer der beiden Teilnetze sowohl innerhalb ihres jeweiligen Teilnetzes untereinander als auch zwischen beiden Teilnetzen miteinander kommunizieren können.

Jeder Nutzer des Kommunikationsnetzes verfügt über ein Endgerät. Bei den Endgeräten handelt es sich um mobile Endgeräte beispielsweise in Form von Laptops, Palmtops, Mobiltelefonen, die mit Datenkommunikationsschnittstellen und dergleichen ausgebildet sind.

In allen Endgeräten kann das digitale Verzeichnis 10 in einer Anzeigeeinrichtung dargestellt werden. Beim digitalen Verzeichnis 10 handelt es sich um die sogenannte Buddy-Liste. Jedem Nutzer des Kommunikationssystems ist eine solche Buddy-Liste 10 zugeordnet, die in einer Speichereinheit elektronisch abgespeichert ist. Zur grundsätzlichen Funktionsweise der Buddy-Liste 10 wird zur Vermeidung von Wiederholungen auf die Ausführungen im Rahmen der Beschreibungseinleitung verwiesen.

Die Buddy-Liste 10 wird individuell von jedem Nutzer des Messenger-Systems erstellt. Dazu wählt dieser aus der Nutzergesamtheit des Messenger-Systems eine Anzahl von Adressat-Nutzern aus, mit denen er gerne kommunizieren möchte. Jedem Adressat-Nutzer ist eine erste Information 14 zu dessen Identifizierung zugeordnet, beispielsweise dessen Benutzername. Die entsprechenden ersten Informationen 14 zu jedem Adressat-Nutzer sind in einem ersten Datensatz 11 abgelegt, der in der Speichereinrichtung abgespeichert ist; Bei dem in Figur 1 dargestellten Ausführungsbeispiel sind beispielhaft vier Adressat-Nutzer im digitalen Verzeichnis 10 abgespeichert, nämlich die Nutzer "Thomas". "Biene", "Charlie" und "Hansi". Der die ersten Informationen 14 repräsentierende erste Datensatz 11 enthält im Falle der Adressat-Nutzer "Thomas" und "Biene" neben den Nutzernamen auch einen Hinweis auf das jeweils verwendete Endgerät, im vorliegenden Fall jeweils ein Mobiltelefon.

Darüber hinaus können im digitalen Verzeichnis 10 weitere, den jeweiligen. Adressat-Nutzern zugeordnete Informationen gespeichert beziehungsweise dargestellt werden. Zunächst ist ein dritter Datensatz 12 vorgesehen, der zu jedem Adressat-Nutzer weitere Informationen enthält, die den entsprechenden ersten Informationen 14 elektronisch zugeordnet sind und die dem jeweiligen Adressat-Nutzer zugeordnete zusätzliche Informationen umfassen. Der dritte Datensatz 12 weist jeweils eine Reihe von sogenannten Emoticons 15 auf, bei denen es sich beispielsweise um Gefühlszustände handelt, die den einzelnen Adressat-Nutzern zugeordnet sind. Je nach aktueller Gefühlslage kann jeder Adressat-Nutzer ein entsprechendes Emoticon 15 auswählen, das dann in dem entsprechenden dritten Datensatz 12 abgelegt und im digitalen Verzeichnis 10 sichtbar gemacht wird.

Schließlich ist in dem digitalen Verzeichnis 10 ein Kennungs-Datensatz 13 dargestellt. Der Kennungs-Datensatz 13 verfügt über eine Anzahl von Kennungen 16, die vom jeweiligen Adressat-Nutzer frei definiert werden können. Jede Kennung 16 ist jeweils einer entsprechenden zweiten Information, die dem jeweiligen Adressat-Nutzer zugeordnete zusätzliche Informationen umfaßt, elektronisch zugeordnet. Dabei erfolgt die Zuordnung derart, dass die Kennungen 16 in einer Weise mit den entsprechenden zweiten Informationen verknüpft sind, dass in der Anzeigeeinrichtung des Endgeräts an Stelle der zweiten Informationen der diese repräsentierende Kennungs-Datensatz 13 angezeigt wird.

Im vorliegenden Ausführungsbeispiel handelt es sich bei den zweiten Informationen, die mit entsprechenden Kennungen verknüpft sind, um Angaben zum Aufenthaltsort des jeweiligen Endgeräts und damit des entsprechenden Adressat-Nutzers.

Im Fall der beiden Adressat-Nutzer "Thomas" und "Biene" kann eine entsprechende Zuordnung über die jeweiligen Zellenidentifikationen (Cell ID) im zellularen Mobilfunknetz erfolgen. Beispielsweise möchte der Adressat-Nutzer "Thomas" mitteilen, dass er sich derzeit in der Schule befindet. Über sein Endgerät, im vorliegenden Fall ein Mobiltelefon, wird vom Kommunikationsnetz zunächst unabhängig vom Adressat-Nutzer dessen Standort bestimmt, beispielsweise indem die entsprechende Cell-ID ermittelt wird. Der Adressat-Nutzer gibt nun an seinem Endgerät die gewünschte Kennung ein, im vorliegenden Fall den Begriff "Schule". Diese Kennung wird im Kennungs-Datensatz abgespeichert. Weiterhin wird die Kennung "Schule" mit der tatsächlichen Ortsangabe, in diesem Fall mit der entsprechenden Cell ID in einer Weise verknüpft, dass an Stelle der eigentlichen Ortsangabe die Kennung im digitalen Verzeichnis 10 angezeigt wird. Immer dann, wenn sich nun der Adressat-Nutzer "Thomas" innerhalb derjenigen Mobilfunkzelle befindet, die mit der Kennung "Schule" verknüpft wurde, wird künftig im digitalen Verzeichnis 10 diese spezielle Kennung 16 angezeigt.

Auf ähnliche Weise können vom Adressat-Nutzer "Thomas" weitere Orte mit entsprechenden, von ihm frei definierbaren Kennungen versehen werden, so dass derjenige Nutzer des Messenger-Systems, der den Adressat-Nutzer "Thomas" in seiner Buddy-Liste 10 aufgenommen hat, unter anderem auch sehen kann, wo sich der Adressat-Nutzer "Thomas" aktuell aufhält,

Durch die Erfindung wird eine besonders benutzerfreundliche Möglichkeit geschaffen in einem digitalen Verzeichnis 10 einem Adressat-Nufzer zugeordnete Informationen darstellen zu können, wobei dieser die entsprechenden Informationen frei kodieren kann.

## Patentansprüche

1. Digitales Verzeichnis zur Verwendung in einem Kommunikationssystem, das in einem aus Datennetz und Mobilfunknetz oder nur Mobilfunknetz bestehenden Kommunikationsnetz betrieben wird, bei dem eine Anzahl von Nutzern mittels entsprechender Endgeräte miteinander kommunizieren oder kommunizieren können, und zur Darstellung in einer Anzeigeeinrichtung eines insbesondere dem Nutzer zugeordneten Endgeräts, wobei das digitale Verzeichnis (10) in einer elektronischen Speichereinheit abgespeichert ist und wobei das Verzeichnis (10) eine von einem Nutzer des Kommunikationssystems aus der Nutzergesamtheit des Kommunikationssystems ausgewählte Anzahl von Adressat-Nutzem, mit denen der Nutzer kommunizieren möchte, sowie diesen Adressat-Nutzern zugeordnete Informationen (14, 15) umfasst, mit einem ersten, in der Speichereinheit abgespeicherten Datensatz (11), der erste Informationen (14) zur Identifizierung der Adressat-Nutzer umfasst und mit wenigstens einem Satz weiterer, zweiter Informationen, die jeweils den entsprechenden ersten Informationen (14) elektronisch zugeordnet sind und die dem jeweiligen Adressat-Nutzer zugeordnete zusätzliche Informationen umfassen,
wobei das Verzeichnis (10) wenigstens einen Kennungs-Datensatz (13) aufweist, der in der Speichereinheit abgespeichert ist, und der Kennungs-Datensatz (13) Kennungen (16) umfasst, die jeweils entsprechenden zweiten Informationen elektronisch zugeordnet sind, wobei die Kennungen (16) von einem jeweiligen Nutzer und/oder Adressat-Nutzer frei definiert oder definierbar sind und die Kennungen (16) elektronisch derart mit den entsprechenden zweiten Informationen verknüpft sind, dass in der Anzeigeeinrichtung des Endgeräts der erste Datensatz (11) und an Stelle der zweiten Informationen der diese repräsentierende Kennungs-Datensatz (13) angezeigt wird oder anzeigbar ist.
**dadurch gekennzeichnet,**
**dass** die zweiten Informationen spezifische Informationen über den Standort des Endgeräts des Adressat-Nutzers umfassen.

2. Digitales Verzeichnis nach Anspruch 1,
**dadurch gekennzeichnet,**
**dass** die einem Adressat-Nutzer zugeordneten Informationen (14, 15) und/oder Kennungen (16) von diesem zumindest teilweise frei erstellt/erstellbar und/oder bearbeitet/bearbeitbar und/oder definiert/definierbar sind.

3. Digitales Verzeichnis nach Anspruch 1 oder 2,
**dadurch gekennzeichnet,**
**dass** die zweiten Informationen in Form von zwei oder mehr Datensätzen vorliegen, die in der Speichereinheit abgespeichert sind, und dass zumindest einzelne Informationen dieser Datensätze mit Kennungen (16) aus einem oder mehreren Kennungs-Datensatz/Datensätzen (13) verknüpft sind.

4. Digitales Verzeichnis nach einem der Ansprüche 1 bis 3,
**dadurch gekennzeichnet,**
**dass** die Kennungen (16) in Form von Text und/oder Symbolen und/oder Geräuschen und/oder Melodien und/oder Videosequenzen ausgebildet sind.

5. Digitales Verzeichnis nach einem der Ansprüche 1 bis 4,
**dadurch gekennzeichnet,**
**dass** die Kennungen (16) in Bezug auf das jeweilige Endgerät zumindest teilweise standortabhängig definiert und elektronisch zugeordnet sind .

6. Digitales Verzeichnis nach einem der Ansprüche 1 bis 5,
**dadurch gekennzeichnet,**
**dass** es in einem Messenger-System verwendet wird.

7. Verfahren zum Betreiben eines Kommunikationssystems in einem aus einem Mobilfunknetz oder Mobilfunknetz und Datennetz bestehenden Kommunikationsnetz, bei dem eine Anzahl von Nutzern mittels entsprechender Endgeräte miteinander kommunizieren können, wobei jedem Nutzer ein digitales Verzeichnis zugeordnet wird, das elektronisch in der Speichereinheit abgespeichert wird und wobei das Verzeichnis (10) eine von einem Nutzer des Kommunikationssystems aus der Nutzergesamtheit des Kommunikationssystems ausgewählte Anzahl von Adressat-Nutzem, mit denen der Nutzer kommunizieren möchte, sowie diesen Adressat-Nutzern zugeordnete Informationen (14, 15) umfasst, mit einem ersten, in der Speichereinheit abgespeicherten Datensatz (11), der erste Informationen (14) zur Identifizierung der Adressat-Nutzer umfasst und mit wenigstens einem Satz weiterer, zweiter Informationen, die jeweils den entsprechenden ersten Informationen (14) elektronisch zugeordnet sind und die dem jeweiligen Adressat-Nutzer zugeordnete zusätzliche Informationen umfassen,
wobei das Verzeichnis (10) wenigstens einen Kennungs-Datensatz (13) aufweist, der in der Speichereinheit abgespeichert ist, und der Kennungs-Datensatz (13) Kennungen (16)
umfasst, die jeweils entsprechenden zweiten Informationen elektronisch zugeordnet sind, wobei die Kennungen (16) von einem jeweiligen Nutzer und/oder Adressat-Nutzer frei definiert oder definierbar sind und die Kennungen (16) elektronisch derart mit den entsprechenden zweiten Informationen verknüpft sind, dass in der Anzeigeeinrichtung des Endgeräts der erste Datensatz (11) und an Stelle der zweiten Informationen der diese repräsentierende Kennungs-Datensatz (13) angezeigt wird oder anzeigbar ist, **dadurch gekennzeichnet,**
**dass** als Mobilfunknetz ein zellulares Mobilfunknetz verwendet wird, dass der ersten Information aus dem ersten Datensatz als zweite Information eine Zellenidentifikation zugeordnet wird und dass der Zellenidentifikation eine vom entsprechenden Adressat-Nutzer frei definierbare Kennung zugeordnet wird.

8. Verfahren nach Anspruch 7,
**dadurch gekennzeichnet,**
**dass** neben dem ersten Datensatz und dem Kennungs-Datensatz weitere Informationen in Form wenigstens eines dritten Datensatzes in der Anzeigeeinrichtung des Endgeräts angezeigt werden und dass die Informationen des dritten Datensatzes, die zusätzliche, dem Adressat-Nutzer zugeordnete Informationen enthalten, entsprechenden ersten Informationen aus dem ersten Datensatz zugeordnet und elektronisch in der Speichereinheit abgespeichert werden.

9. Verfahren nach einem der Ansprüche 7 oder 8,
**dadurch gekennzeichnet,**
**dass** das Kommunikationsnetz wenigstens eine zentrale Rechnereinheit aufweist, dass die Speichereinheit der Rechnereinheit zugeordnet ist und dass die von jedem Adressat-Nutzer des Kommunikationssystems erstellten, ihm zugeordneten Informationen und/oder Kennungen und/oder das digitale Verzeichnis eines jeden Nutzers in der Speichereinheit abgespeichert werden.

10. Verfahren nach einem der Ansprüche 7 bis 9,
**dadurch gekennzeichnet,**
**dass** jedes Endgerät eine Speichereinheit aufweist und dass die von jedem Adressat-Nutzer des Kommunikationssystems erstellten, ihm zugeordneten Informationen und/oder Kennungen und/oder das digitale Verzeichnis eines jeden Nutzers in der Speichereinheit abgespeichert werden.

11. Verfahren nach einem der Ansprüche 7 bis 10,
**dadurch gekennzeichnet,**
**dass** die im digitalen Verzeichnis zusammengefaßten spezifischen Informationen eines bestimmten Nutzers von diesem selbst erzeugt und/oder bearbeitet werden.

12. Verfahren nach einem der Ansprüche 7 bis 11,
**dadurch gekennzeichnet,**
**dass** als Kommunikationssystem ein Messenger-System verwendet wird.

13. Kommunikationsnetz, mit wenigstens einer elektronischen Speichereinheit und einer Anzahl von Endgeräten, über die Nutzer im Kommunikationsnetz kommunizieren oder kommunizieren können,
**dadurch gekennzeichnet,**
**dass** für jeden Nutzer ein digitales Verzeichnis nach einem der Ansprüche 1 bis 6 vorgesehen ist.

14. Kommunikationsnetz nach Anspruch 13,
**dadurch gekennzeichnet,**
**dass** dieses zur Durchführung des Verfahrens nach einem der Ansprüche 7 bis 12 ausgebildet ist.

15. Kommunikationsnetz nach Anspruch 13 oder 14,
**dadurch gekennzeichnet,**
**dass** dieses eine zentrale Rechnereinheit aufweist und dass die Speichereinheit der Rechnereinheit zugeordnet ist.

16. Kommunikationsnetz nach einem der Ansprüche 13 bis 15,
**dadurch gekennzeichnet,**
**dass** jedes Endgerät eine Speichereinheit aufweist.

17. Kommunikationsnetz nach einem der Ansprüche 13 bis 16,
**dadurch gekennzeichnet,**
**dass** wenigstens ein Endgerät als stationäres Endgerät ausgebildet ist.

18. Kommunikationsnetz nach einem der Ansprüche 13 bis 17,
**dadurch gekennzeichnet,**
**dass** wenigstens ein Endgerät als mobiles Endgerät ausgebildet ist.

19. Kommunikationsnetz nach einem der Ansprüche 13 bis 18,
**dadurch gekennzeichnet,**
**dass** das Kommunikationssystem als Messenger-System ausgebildet ist.

20. Kommunikationsnetz nach einem der Ansprüche 13 bis 19,
**dadurch gekennzeichnet,**
**dass** das Kommunikationsnetz als Datennetz und/oder Mobilfunknetz ausgebildet ist.

21. Kommunikationsnetz nach einem der Ansprüche 13 bis 19,
**dadurch gekennzeichnet,**
**dass** das Kommunikationsnetz aus zwei miteinander verknüpften Teilnetzen gebildet ist und dass ein Teilnetz als Datennetz und ein Teilnetz als Mobilfunknetz ausgebildet ist.

## Claims

1. Digital directory for use in a communication system which is operated in a communication network consisting of a data network and mobile telephone network or only a mobile telephone network and in which a number of users communicate or can communicate with each other by means of corresponding end devices, and for display in a display device of an end device which is in particular associated with the user, the digital directory (10) being stored in an electronic storage unit, and the directory (10) comprising a number of addressee users which are selected by a user of the communication system from all of the users of the communication system and with which the user wishes to communicate and comprising pieces of information (14, 15) associated with these addressee users, having a first data set (11) which is stored in the storage unit and which comprises first pieces of information (14) to identify the addressee user and having at least one set of additional second pieces of information which are each electronically associated with the corresponding first pieces of information (14) and which comprise the additional pieces of information which are associated with the respective addressee user, the directory (10) having at least one identification data set (13) which is stored in the storage unit and the identification data set (13) comprising identifiers (16) which are each electronically associated with corresponding second pieces of information, the identifiers (16) being freely defined or being able to be freely defined by a respective user and/or addressee user and the identifiers (16) being electronically linked to the corresponding second pieces of information in such a manner that, in the display device of the end device, the first data set (11) and in place of the second pieces of information the identification data set (13) which represents them is displayed or can be displayed,
**characterised in that**
the second pieces of information comprise specific pieces of information relating to the location of the end device of the addressee user.

2. Digital directory according to claim 1,
**characterised in that**
the pieces of information (14, 15) associated with an addressee user and/or identifiers (16) are or can be at least partially freely produced and/or processed and/or defined by said addressee user.

3. Digital directory according to either claim 1 or claim 2,
**characterised in that**
the second pieces of information are in the form of two or more data sets which are stored in the storage unit, and **in that** at least individual pieces of information of these data sets are linked with identifiers (16) from one or more identification data set(s) (13).

4. Digital directory according to any one of claims 1 to 3,
**characterised in that**
the identifiers (16) are constructed in the form of text and/or symbols and/or sounds and/or melodies and/or video sequences.

5. Digital directory according to any one of claims 1 to 4,
**characterised in that**
the identifiers (16) are at least partially defined and electronically associated in accordance with location with respect to the respective end device.

6. Digital directory according to any one of claims 1 to 5,
**characterised in that**
it is used in a messenger system.

7. Method for operating a communication system in a communication network consisting of a mobile telephone network or a mobile telephone network and data network and in which a number of users can communicate with each other by means of corresponding end devices, there being associated with each user a digital directory which is electronically stored in the storage unit, and the directory (10) comprising a number of addressee users which are selected by a user of the communication system from all of the users of the communication system and with which the user wishes to communicate and comprising pieces of information (14, 15) associated with these addressee users, having a first data set (11) which is stored in the storage unit and which comprises first pieces of information (14) to identify the addressee users and having at least one set of additional second pieces of information which are each electronically associated with the corresponding first pieces of information (14) and which comprise the additional pieces of information which are associated with the respective addressee user,
the directory (10) having at least one identification data set (13) which is stored in the storage unit and the identification data set (13) comprising identifiers (16) which are each electronically associated with corresponding second pieces of information, the identifiers (16) being or being able to be freely defined by a respective user and/or addressee user and the identifiers (16) being electronically linked to the corresponding second pieces of information in such a manner that, in the display device of the end device, the first data set (11) and in place of the second pieces of information the identification data set (13) which represents them is displayed or can be displayed,
**characterised in that**
a cellular mobile telephone network is used as a mobile telephone network, **in that** a cell identification is associated as second pieces of information with the first pieces of information from the first data set and **in that** an identifier which can be freely defined by the corresponding addressee user is associated with the cell identification.

8. Method according to claim 7,
**characterised in that**,
in addition to the first data set and the identification data set, additional pieces of information in the form of at least a third data set are displayed in the display device of the end device and **in that** the pieces of information of the third data set which contain additional pieces of information associated with the addressee user are associated with corresponding first pieces of information from the first data set and electronically stored in the storage unit.

9. Method according to either claim 7 or claim 8,
**characterised in that**
the communication network has at least one central processing unit, **in that** the storage unit is associated with the processing unit and **in that** the pieces of information which are produced by each addressee user of the communication system and which are associated with said user and/or identifiers and/or the digital directory of each user are stored in the storage unit.

10. Method according to any one of claims 7 to 9,
**characterised in that**
each end device has a storage unit and **in that** the pieces of information which are produced by each addressee user of the communication system and which are associated with said user and/or identifiers and/or the digital directory of each user are stored in the storage unit.

11. Method according to any one of claims 7 to 10,
**characterised in that**
the specific pieces of information of a specific user summarised in the digital directory are produced and/or processed by the user themselves.

12. Method according to any one of claims 7 to 11,
**characterised in that**
a messenger system is used as a communication system.

13. Communication network, having at least one electronic storage unit and a number of end devices, by means of which users in the communication network communicate or can communicate,
**characterised in that**
a digital directory according to any one of claims 1 to 6 is provided for each user.

14. Communication network according to claim 13,
**characterised in that**
it is constructed to carry out the method according to any one of claims 7 to 12.

15. Communication network according to claim 13 or 14,
**characterised in that**
it has a central processing unit and **in that** the storage unit is associated with the processing unit.

16. Communication network according to any one of claims 13 to 15,
**characterised in that**
each end device has a storage unit.

17. Communication network according to any one of claims 13 to 16,
**characterised in that**
at least one end device is constructed as a stationary end device.

18. Communication network according to any one of claims 13 to 17,
**characterised in that**
at least one end device is constructed as a mobile end device.

19. Communication network according to any one of claims 13 to 18,
**characterised in that**
the communication system is constructed as a messenger system.

20. Communication network according to any one of claims 13 to 19,
**characterised in that**
the communication network is constructed as a data network and/or mobile telephone network.

21. Communication network according to any one of claims 13 to 19,
**characterised in that**
the communication network is formed from two part-networks which are linked to each other, and **in that** one part-network is constructed as a data network and one part-network is constructed as a mobile telephone network.

## Revendications

1. Répertoire numérique destiné à être utilisé dans un système de communication qui est exploité dans un réseau de communication composé d'un réseau de données et d'un réseau de téléphonie mobile, ou seulement d'un réseau de téléphonie mobile, dans lequel un certain nombre d'utilisateurs communiquent ou peuvent communiquer entre eux au moyen de terminaux correspondants, et destiné à la représentation dans un dispositif d'affichage d'un terminal attribué en particulier à l'utilisateur, le répertoire numérique (10) étant mémorisé dans une unité de mémoire électronique, et le répertoire (10) comprenant un certain nombre de destinataires-utilisateurs sélectionnés par un utilisateur du système de communication parmi la totalité des utilisateurs du-dit système avec lesquels l'utilisateur souhaiterait communiquer, ainsi que des informations (14, 15) affectées à ces destinataires-utilisateurs, avec un premier ensemble de données (11) mémorisé dans l'unité de mémoire et qui comprend des premières informations (14) destinées à l'identification des destinataires-utilisateurs, et avec au moins un deuxième ensemble d' informations qui sont respectivement affectées électroniquement aux premières informations (14) correspondantes et qui comprennent des informations supplémentaires attribuées au destinataire- utilisateur respectif,
le répertoire (10) présentant au moins un ensemble de données d'identifiants (13) qui est mémorisé dans l'unité de mémoire, et l'ensemble de données d'identifiants (13) comprenant des identifiants (16) qui sont respectivement affectés électroniquement à un deuxième ensemble d' informations correspondantes, les identifiants (16) étant définis ou pouvant être définis librement par un utilisateur respectif et/ou un destinataire-utilisateur respectif, et les identifiants (16) étant reliés électroniquement au deuxième ensemble d' informations correspondantes de telle sorte que, dans le dispositif d'affichage du terminal, le premier ensemble de données (11) et, à la place du deuxième ensemble d' informations, l'ensemble de données d'identifiants (13) représentant celles-ci, sont affichés ou peuvent être affichés,
**caractérisé en ce que**
le deuxième ensemble d'informations comporte des informations spécifiques sur l'emplacement du terminal du destinataire-utilisateur.

2. Répertoire numérique selon la revendication 1,
**caractérisé en ce que**
les informations (14, 15) et/ou les identifiants affectés à un destinataire-utilisateur sont établis/peuvent être établis et/ou sont traités/peuvent être traités et/ou sont définis/peuvent être définis librement au moins en partie par ce destinataire-utilisateur.

3. Répertoire numérique selon la revendication 1 ou 2,
**caractérisé en ce que**
le deuxième ensemble d' informations se présente sous la forme de deux ensembles de données ou plus qui sont mémorisés dans l'unité de mémoire, et **en ce qu'**au moins des informations individuelles de ces ensembles de données sont reliées à des identifiants (16) en provenance d'un ou de plusieurs ensembles de données d'identifiants (13).

4. Répertoire numérique selon une des revendications 1 à 3,
**caractérisé en ce que**
les identifiants (16) sont constitués sous forme de texte et/ou de symboles et/ou de bruits et/ou de mélodies et/ou de séquences vidéo.

5. Répertoire numérique selon une des revendications 1 à 4,
**caractérisé en ce que**,
par rapport au terminal respectif, les identifiants (16) sont définis au moins partiellement en fonction de l'emplacement et affectés électroniquement.

6. Répertoire numérique selon une des revendications 1 à 5,
**caractérisé en ce**
**qu'**il est utilisé dans un système Messenger.

7. Procédé d'exploitation d'un système de communication dans un réseau de communication composé d'un réseau de téléphonie mobile, ou d'un réseau de téléphonie mobile et d'un réseau de données, dans lequel un certain nombre d'utilisateurs peuvent communiquer entre eux au moyen de terminaux correspondants, un répertoire numérique étant attribué à chaque utilisateur et étant mémorisé électroniquement dans l'unité de mémoire, et le répertoire (10) comprenant un certain nombre de destinataires-utilisateurs, sélectionnés par un utilisateur du système de communication parmi la totalité des utilisateurs du système de communication avec lesquels l'utilisateur souhaiterait communiquer, ainsi que des informations (14, 15) attribuées à ces destinataires-utilisateurs, avec un premier ensemble de données (11) mis en mémoire dans l'unité de mémoire et qui comprend des premières informations (14) destinées à l'identification des destinataires-utilisateurs, et avec au moins un deuxième ensemble d'autres informations qui sont respectivement affectées électroniquement aux premières informations (14) correspondantes et qui comprennent des informations supplémentaires affectées au destinataire-utilisateur respectif,
le répertoire (10) présentant au moins un ensemble de données d'identifiants (13) mémorisé dans l'unité de mémoire, et l'ensemble de données d'identifiants (13) comprenant des identifiants (16) qui sont respectivement affectés électroniquement à un deuxième deuxième ensemble d' informations correspondantes, les identifiants (16) étant définis ou pouvant être définis librement par un utilisateur et/ou destinataire-utilisateur respectif, et les identifiants (16) étant reliés électroniquement au deuxième ensemble d' informations correspondantes de telle sorte que, dans le dispositif d'affichage du terminal, le premier ensemble de données (11) et, à la place du deuxième ensemble informations, l'ensemble de données d'identifiants (13) représentant celles-ci sont affichés ou peuvent être affichés,
**caractérisé en ce**
**qu'**un réseau de téléphonie mobile cellulaire est utilisé en tant que réseau de téléphonie mobile, en ce qu'une identification de cellules est affectée à la première information en provenance du premier ensemble de données en tant que deuxième information, et en ce qu'un identifiant pouvant être défini librement par le destinataire-utilisateur correspondant est affecté à l'identification de cellules.

8. Procédé selon la revendication 7,
**caractérisé en ce que**,
outre le premier ensemble de données et l'ensemble de données d'identifiants, d'autres informations sont affichées dans le dispositif d'affichage du terminal sous la forme d'au moins un troisième ensemble de données, et **en ce que** les informations du troisième ensemble de données qui contiennent des informations supplémentaires affectées au destinataire-utilisateur sont affectées à des premières informations correspondantes en provenance du premier ensemble de données et sont mémorisés électroniquement dans l'unité de mémoire.

9. Procédé selon une des revendications 7 ou 8,
**caractérisé en ce que**
le réseau de communication présente au moins une unité d'ordinateur centrale, **en ce que** l'unité de mémoire est affectée à l'unité d'ordinateur centrale, et **en ce que** les informations et/ou identifiants et/ou le répertoire numérique de chaque utilisateur établis par chaque destinataire-utilisateur du système de communication et attribués à celui-ci sont mémorisés dans l'unité de mémoire.

10. Procédé selon une des revendications 7 à 9,
**caractérisé en ce que**
chaque terminal présente une unité de mémoire, et **en ce que** les informations et/ou identifiants et/ou le répertoire numérique de chaque utilisateur établis par chaque destinataire-utilisateur du système de communication et attribués à celui-ci sont mémorisés dans l'unité de mémoire.

11. Procédé selon une des revendications 7 à 10,
**caractérisé en ce que**
les informations spécifiques d'un utilisateur précis rassemblées dans le répertoire numérique sont produites et/ou traitées par cet utilisateur lui-même.

12. Procédé selon une des revendications 7 à 11,
**caractérisé en ce**
**qu'**un système Messenger est utilisé en tant que système de communication.

13. Réseau de communication, avec au moins une unité de mémoire électronique et un certain nombre de terminaux par le biais desquels les utilisateurs communiquent ou peuvent communiquer dans le réseau de communication,
**caractérisé en ce que**,
pour chaque utilisateur, il est prévu un répertoire numérique selon une des revendications 1 à 6.

14. Réseau de communication selon la revendication 13,
**caractérisé en ce que**
ce réseau est constitué pour la réalisation du procédé selon une des revendications 7 à 12.

15. Réseau de communication selon la revendication 13 ou 14,
**caractérisé en ce que**
ce réseau présente une unité d'ordinateur centrale, et **en ce que** l'unité de mémoire est affectée à l'unité d'ordinateur.

16. Réseau de communication selon une des revendications 13 à 15,
**caractérisé en ce que**
chaque terminal présente une unité de mémoire.

17. Réseau de communication selon une des revendications 13 à 16,
**caractérisé en ce**
**qu'**au moins un terminal est constitué en tant que terminal fixe.

18. Réseau de communication selon une des revendications 13 à 17,
**caractérisé en ce**
**qu'**au moins un terminal est constitué en tant que terminal mobile.

19. Réseau de communication selon une des revendications 13 à 18,
**caractérisé en ce que**
le système de communication est constitué en tant que système Messenger.

20. Réseau de communication selon une des revendications 13 à 19,
**caractérisé en ce que**
le réseau de communication est constitué en tant que réseau de données et/ou en tant que réseau de téléphonie mobile.

21. Réseau de communication selon une des revendications 13 à 19,
**caractérisé en ce que**
le réseau de communication est formé de deux réseaux partiels reliés l'un à l'autre et **en ce qu'**un réseau partiel est constitué en tant que réseau de données et l'autre réseau partiel en tant que réseau de téléphonie mobile.
